# EUROPEAN PATENT APPLICATION

(11) **EP 1 333 352 A2**
(43) Date of publication of application: **06.08.2003**
(21) Application number: 02255106.3
(22) Date of filing: 22.07.2002
(51) Int. Cl.: G06F 1/00

(54) **Data management mechanism and apparatus or card having data management mechanism**

(30) Priority: 31.01.2002 JP 2002024237
(71) Applicant: FUJITSU LIMITED, Kawasaki-shi, Kanagawa 211-8588 (JP)
(72) Inventor: Dohi, Hiroshi, c/o Fujitsu Limited, Kawasaki-shi, Kanagawa 211-8588 (JP)
(74) Representative: Mohun, Stephen John

(57) **Abstract**

A data management mechanism is provided with a tamper-free clock, and a recording section which records information related to an access to a storage medium as an access log in the storage medium. The information includes time information from the tamper-free clock.

## Description

### BACKGROUND OF THE INVENTION

This application claims the benefit of a Japanese Patent Application No.2002-024237 filed January 31, 2002, in the Japanese Patent Office, the disclosure of which is hereby incorporated by reference.

### 1. Field of the Invention

The present invention generally relates to data management mechanisms and apparatuses or cards having a data management mechanism, and more particularly to a data management mechanism for managing a log of accesses to a storage medium, and an apparatus or a card having such a data management mechanism. The apparatus having the data management mechanism may be formed by an information processing apparatus such as a personal computer (PC), and a storage apparatus such as a disk unit, for example. On the other hand, the card having the data management mechanism may be formed by a so-called PC card or the like which is detachably connectable to a personal computer.

### 2. Description of the Related Art

In information processing apparatuses such as personal computers, various kinds of data are frequently recorded on a storage medium such as a magneto-optical disk. Particularly when the storage medium is portable or removable, it is very convenient in that the user can freely carry the storage medium. For example, the user may use the storage medium in an information processing apparatus other than the user's information processing apparatus.

Thus, portable storage media are convenient, but an unauthorized or illegal access may be made to the data recorded in the storage medium. When the unauthorized access is made to the storage medium, the data recorded in the storage medium may be inspected by a third party other than the authorized or legitimate user, and the recorded data may be erased or modified.

Methods of preventing unauthorized access to the storage medium are known. Various methods have been proposed to prevent unauthorized access to the storage medium, including methods of carrying out password authentication. However, even if measures are taken to prevent unauthorized access to the storage medium, there is always a possibility of an unauthorized access by a third party.

Conventionally, when an unauthorized access is made to the storage medium and the authorized user thereafter makes access to this storage medium, there was no means for the authorized user to know when the unauthorized access was made. For this reason, there was a problem in that the authorized user may use the storage medium which has been subjected to an unauthorized access and has the data recorded therein erased or modified by the unauthorized access, without knowing that the storage medium has been subjected to the unauthorized access.

On the other hand, there conventionally were demands to manage a log of accesses to a portable storage medium by a simple method.

### SUMMARY OF THE INVENTION

Accordingly, it is a general object of the present invention to provide a novel and useful data management mechanism and apparatus or card having a data management mechanism, in which the problems described above are eliminated.

Another and more specific object of the present invention is to provide a data management mechanism and an apparatus or a card having a data management mechanism, which can manage a log of accesses to a storage medium by a simple method and can also detect unauthorized access to the storage medium.

Still another object of the present invention is to provide a data management mechanism comprising a tamper-free clock, and recording means for recording information related to an access to a storage medium as an access log in the storage medium, the information including time information from the tamper-free clock. According to the data management mechanism of the present invention, it is possible to manage a log of accesses to a storage medium by a simple method and can also detect unauthorized access to the storage medium.

A further object of the present invention is to provide an information processing apparatus forming a host unit which accesses a storage medium, comprising a processor which processes data, and a data management mechanism, where the data management mechanism comprises a tamper-free clock, and recording means for recording information related to an access to the storage medium as an access log in the storage medium, the information including time information from the tamper-free clock. According to the information processing apparatus of the present invention, it is possible to manage a log of accesses to a storage medium by a simple method and can also detect unauthorized access to the storage medium.

Another and more specific object of the present invention is to provide a storage apparatus comprising a section which receives a loaded storage medium, and a data management mechanism, where the data management mechanism comprises a tamper-free clock, and recording means for recording information related to an access to the storage medium as an access log in the storage medium, the information including time information from the tamper-free clock. According to the storage apparatus of the present invention, it is possible to manage a log of accesses to a storage medium by a simple method and can also detect unauthorized access to the storage medium.

Still another object of the present invention is to provide a card which is detachably connectable to an information processing apparatus forming a host unit which accesses a storage medium, comprising a memory which stores data, and a data management mechanism, where the data management mechanism comprises a tamper-free clock, and recording means for recording information related to an access to the storage medium as an access log in the storage medium, the information including time information from the tamper-free clock. According to the card of the present invention, it is possible to manage a log of accesses to a storage medium by a simple method and can also detect unauthorized access to the storage medium.

Other objects and further features of the present invention will be apparent from the following detailed description when read in conjunction with the accompanying drawings.

### BRIEF DESCRIPTION OF THE DRAWINGS

FIG. 1 is a diagram showing a system applied with a first embodiment of a data management mechanism according to the present invention;
FIG. 2 is a system block diagram showing a structure of an important part of a personal computer;
FIG. 3 is a system block diagram showing a structure of an important part of a disk drive;
FIG. 4 is a flow chart for explaining an embodiment of a log information recording process;
FIG. 5 is a flow chart for explaining a modification of the log information recording process;
FIG. 6 is a diagram for explaining a data structure of log information;
FIG. 7 is a flow chart for explaining a time information recording process;
FIG. 8 is a diagram for explaining a recording region in which time information is recorded;
FIG. 9 is a flow chart for explaining a check sum recording process;
FIG. 10 is a diagram for explaining recording regions on a disk;
FIG. 11 is a flow chart for explaining a check sum confirmation process;
FIG. 12 is a diagram showing a system applied with a second embodiment of the data management mechanism according to the present invention;
FIG. 13 is a system block diagram showing a structure of an important part of a disk drive;
FIG. 14 is a system block diagram showing a hardware structure of the data management mechanism;
FIG. 15 is a diagram showing a system applied with a third embodiment of the data management mechanism according to the present invention; and
FIG. 16 is a diagram showing a structure of an important part of a PC card.

### DESCRIPTION OF THE PREFERRED EMBODIMENTS

A description will be given of embodiments of a data management mechanism according to the present invention, an apparatus having a data management mechanism according to the present invention, and a card having a data management mechanism according to the present invention, by referring to the drawings.

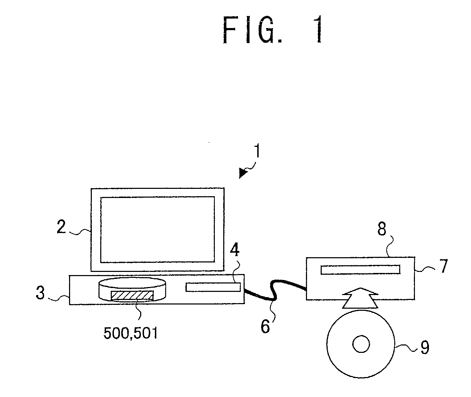

FIG. 1 is a system block diagram showing a system applied with a first embodiment of the data management mechanism according to the present invention. The system shown in FIG. 1 includes a personal computer 1 and a disk drive 7. The personal computer 1 and the disk drive 7 are connected via a wire and/or wireless connecting means 6. The connecting means 6 may be formed by a cable and/or radio network.

The personal computer 1 includes a display 2 and a main body 3. The main body 3 has a PC card connecting section 4 to which a PC card (not shown) is detachably inserted and connected. The personal computer 1 forms a first embodiment of the information processing apparatus according to the present invention. In this embodiment, the PC card connecting section 4 may be omitted.

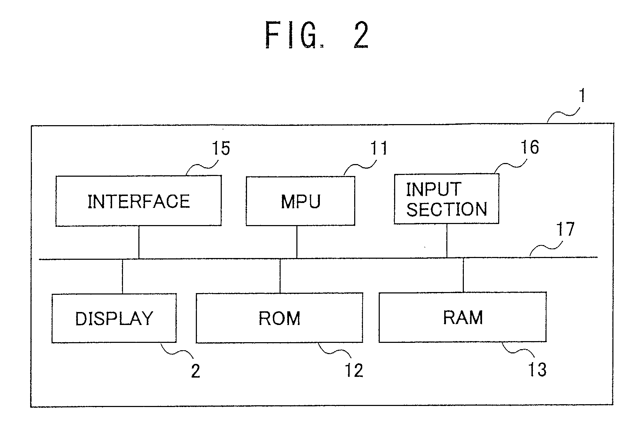

FIG. 2 is a system block diagram showing a structure of an important part of the personal computer 1. The personal computer 1 shown in FIG. 2 includes an MPU 11, a ROM 12 which stores firmware, a RAM 13 which forms work area, an interface 15 with respect to the disk drive 7, the display 2, and an input section 16 which are connected via a bus 17. Illustration of the input section 16 is omitted in FIG. 1, but includes a keyboard, a mouse and the like. The hardware structure itself of the personal computer 1 is known, and of course, it is possible to use other known hardware structures for the personal computer 1. The ROM 12 and the RAM 13 may be formed by a magnetic disk unit and/or a semiconductor memory device.

A control software 500 for controlling access and the like from the personal computer 1 with respect to a disk 9, and a data management mechanism 501 for managing a log and the like of accesses to the disk 9, are stored in the ROM 12 and/or the RAM 13. The data management mechanism 501 is formed by software in this embodiment, and forms the first embodiment of the data management mechanism according to the present invention.

The control software 500 can link to a file system which is formed by the personal computer 1, monitor accesses to the disk 9 from the file system, and supply necessary data to the data management mechanism 501. The control software 500 may be provided as standard equipment in the personal computer 1, for example. In addition, the control software 500 and the data management mechanism 501 may be provided separately. The control software 500 may be provided for each type of file system or, designed to cope with a plurality of types of file systems. Accordingly, the data management mechanism 501 may be utilized in various environments where the control software 500 is provided.

The control software 500 and/or the data management mechanism 501 may be provided together with a device driver software which drives the disk drive 7 or, may be provided in the form of an application software.

The disk drive 7 includes a disk inserting opening 8 as shown in FIG. 1. The disk 9 is loaded into and unloaded from the disk drive 7 via the disk inserting opening 8. In this embodiment, the disk 9 used in the disk drive 7 is a magneto-optical (MO) disk.

The storage medium itself is not limited to a particular type of media such as the disk 9, as long as an information processing apparatus such as the personal computer 1 can record information on and/or reproduce information from the storage medium. The storage medium may be selected from disk and card-shaped magnetic recording media, optical recording media and magneto-optical recording media, and semiconductor memory devices such as RAMs. Moreover, the storage medium is not limited to portable or removable storage media. Accordingly, the storage apparatus simply needs to have a structure in accordance with the kind of storage medium used, and is not limited to the disk drive 7.

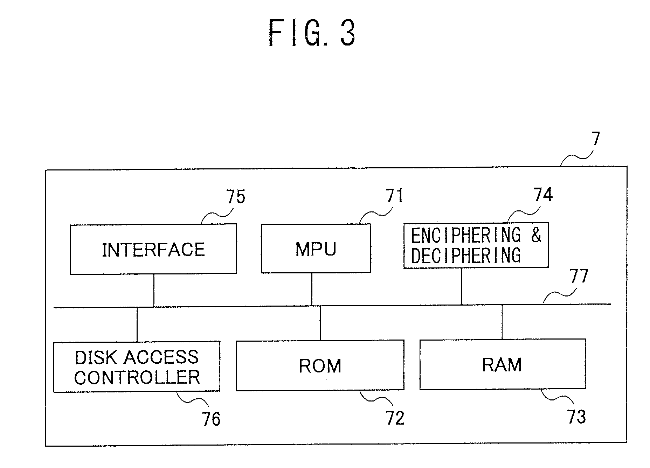

FIG. 3 is a system block diagram showing a structure of an important part of the disk drive 7. The disk drive 7 shown in FIG. 3 includes an MPU 71, a ROM 72 which stores firmware, a RAM 73 which forms work area, an enciphering and deciphering circuit 74, an interface 75 with respect to the personal computer 1 which forms a host unit, and a disk access controller 76 which are connected via a bus 77. The enciphering and deciphering circuit 74 may be omitted when not enciphering log information which will be described later. A driving means itself for rotating the disk 9, and a recording and reproducing means itself for recording information on and reproducing information from the disk 9 are known, and thus, illustration and description thereof will be omitted. The hardware structure itself of the disk drive 7 is known, and of course, it is possible to use other known hardware structures for the disk drive 7.

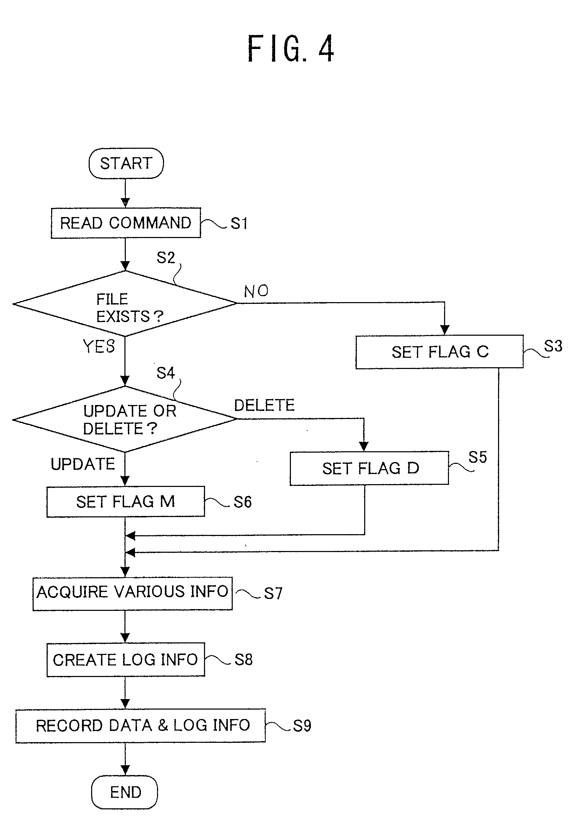

FIG. 4 is a flow chart for explaining an embodiment of a log information recording process according to the present invention. The log information recording process shown in FIG. 4 is carried out by the data management mechanism 501. A step S1 reads a command which is input by the user from the input section 16 of the personal computer 1 and instructs storage of data in the disk 9. A step S2 decides whether or not a file which is to store the data already exists in the disk 9. If the decision result in the step S2 is NO, a step S3 judges that the command is a file create command which instructs a file to be newly created in the disk 9, and sets a create flag C which indicates that a file has been created. After the step S3, the process advances to a step S7 which will be described later.

On the other hand, if the decision result in the step S2 is YES, a step S4 decides whether the command is a file update command which instructs a file in the disk 9 to be updated or a file delete command which instructs a file in the disk 9 to be deleted. If the step S4 judges that the command is a file delete command, a step S5 sets a delete flag D which indicates that a file has been deleted, and the process advances to the step S7 which will be described later. If the step S4 judge that the command is a file updated command, a step S6 sets an update flag M which indicates that a file has been updated, and the process advances to the step S7.

The step S7 acquires various information including, time information related to a time when a file create command, a file delete command or a file update command is executed, user information such as a user ID of the user who input the command, data management mechanism information such as a mechanism ID of the data management mechanism 501, and storage apparatus information such as an apparatus ID of the disk drive 7. The user information is input by a known method when the user makes a log-on to the personal computer 1, and is stored in the RAM 13 or the like within the personal computer 1. Hence, the user information can be acquired by reading the user information from the RAM 13 or the like. The time information related to the time when the file create command, the file delete command or the file update command is executed can be acquired from a tamper-free clock within the data management mechanism 501. This tamper-free clock is an independent clock which is unaffected even when the user changes the time setting of a reference clock of an operating system (OS) of the personal computer 1 by back-dating the reference clock, for example. The data management mechanism information is assigned to each data management mechanism 501, and can be acquired from the data management mechanism 501. The storage apparatus information is assigned to each disk drive 7 and is stored in the ROM 72 or the like. Hence, the storage apparatus information can be acquired by reading the storage apparatus information from the ROM 72 or the like. The information acquired in the step S7 may include at least the time information.

A step S8 creates information related to the log of file accesses, based on the flags set in the steps S3, S5 or S6 and the information acquired in the step S7. In other words, the step S8 creates log information related to a log of accesses to (access log of) the disk 9 within the disk drive 7. The data management mechanism 501 may encipher the log information if necessary. A step S9 records on the disk 9 data input from the input section 16 of the personal computer 1, data input to the personal computer 1 from another personal computer or the like via a network or the like, and the log information or the enciphered log information.

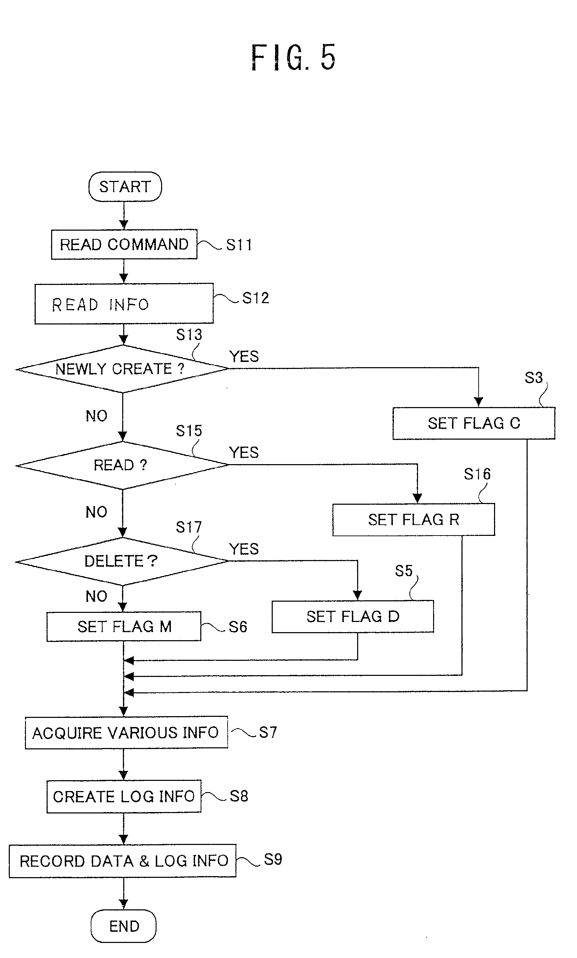

FIG. 5 is a flow chart for explaining a modification of the log information recording process. In FIG. 5, those steps which are the same as those corresponding steps in FIG. 4 are designated by the same reference numerals, and a description thereof will be omitted. The log information recording process shown in FIG. 5 is carried out by the data management mechanism 501. A step S11 reads a command which is input by the user from the input section 16 of the personal computer 1 and instructs storage of data in the disk 9 or, an access command received by the personal computer 1 or an access command to the disk 9 generated within the personal computer 1. A step S12 reads information from the control software 500. A step S13 decides whether or not the command is a file create command which instructs a file to be newly created in the disk 9. The process advances to the step S3 if the decision result in the step S13 is YES.

On the other hand, if the decision result in the step S13 is NO, a step S15 decides whether or not the command is a read command which instructs reading of the data in the file of the disk 9. If the decision result in the step S15 is YES, a step S16 sets a read flag R which indicates that the file has been read, and the process advances to the step S7. If the decision result in the step S15 is NO, a step S17 decides whether or not the command is a file delete command which instructs deletion of the file in the disk 9. The process advances to the step S5 if the decision result in the step S17 is YES, and the process advances to the step S6 if the decision result in the step S17 is NO.

In the log information recording process shown in FIGS. 4 and 5, the timings at which the step S7 acquires the user information and the storage apparatus information may respectively be (i) before the step S8 is carried out, (ii) when starting the personal computer 1 or when the personal computer 1 recognizes the disk drive 7 such as when the disk drive 7 is connected to the personal computer 1, (iii) when carrying out a password authentication in a case where the access to the disk 9 is enabled by the password authentication, and the like.

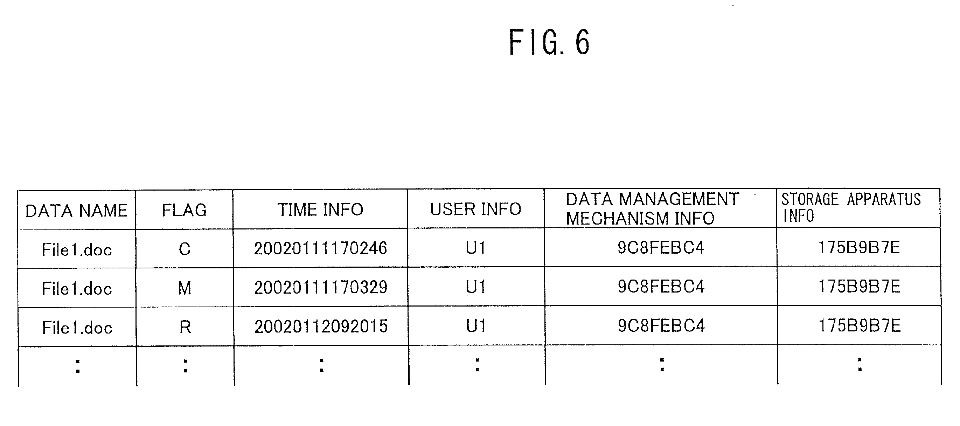

FIG. 6 is a diagram for explaining a data structure of the log information. As shown in FIG. 6, the log information includes a data name (or file name), a flag, time information, user information, data management mechanism information, and storage apparatus information.

By recording the log information described above in the disk 9, the user can confirm the access log to the disk 9 by reading this log information. Accordingly, it is possible to know of an unauthorized access to the disk 9 by confirming the access log. In addition, because the access log to the disk 9 is recorded, there is also an effect of preventing unauthorized access to the disk 9.

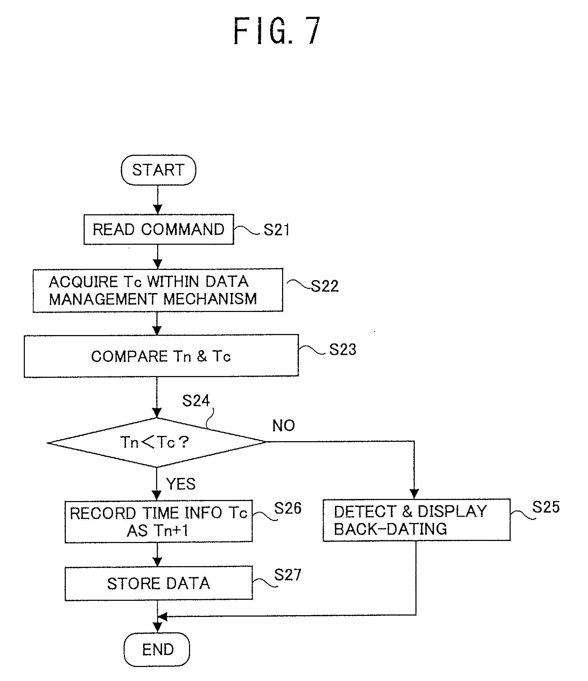

FIG. 7 is a flow chart for explaining a time information recording process. The time information recording process shown in FIG. 7 is carried out by the data management mechanism 501. In FIG. 7, a step S21 reads a command which is input by the user from the input section 16 of the personal computer 1 and instructs storage of data in the disk 9 or, an access command received by the personal computer 1 or an access command to the disk 9 generated within the personal computer 1. A step S22 acquires time information Tc of the tamper-free clock within the data management mechanism 501 at the point in time when the command is read in the step S21. A step S23 compares time information Tn recorded last in a storage region 600 and the time information Tc acquired from the data management mechanism 501.

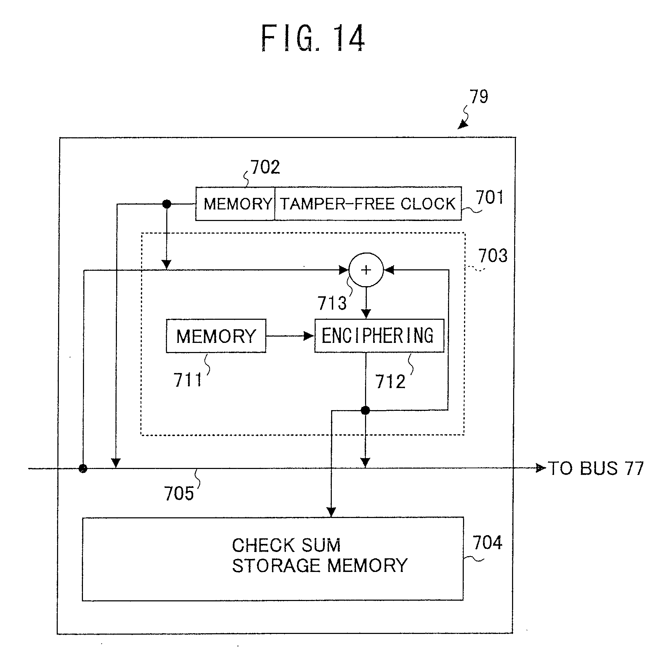

When the tamper-free clock is formed by software as in the case shown in FIG. 7, the time information is acquired from the personal computer 1, thereby making it effective from the point of view of guaranteeing the time. In addition, when the tamper-free clock is formed by hardware as will be described later in conjunction with FIG. 14, it is also similarly effective from the point of view of guaranteeing the time to keep a log similar to that used in FIG. 7.

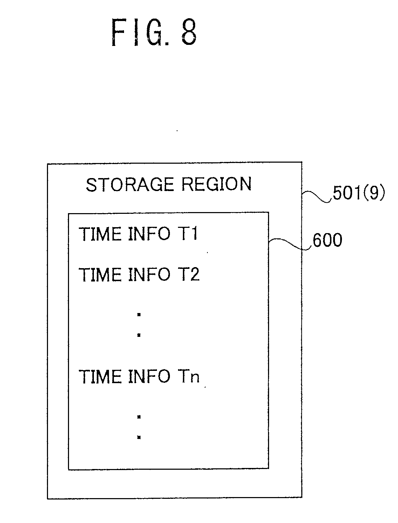

FIG. 8 is a diagram for explaining the storage region 600 which records the time information. The storage region 600 may be provided within the data management mechanism 501 or in the disk 9. The time information of the tamper-free clock within the data management mechanism 501 at the point in time when the access is generated with respect to the disk 9 is stored in this storage region 600. In the case shown in FIG. 8, time information T1, T2, ..., Tn is recorded in the storage region 600.

Returning now to the description of FIG. 7, a step S24 decides whether or not Tn < Tc as a result of comparing the time information Tn and Tc in the step S23. If the decision result in the step S24 is NO, a step S25 detects a back-dating and displays the back-dating on the display 2 of the personal computer 1, and the process ends. On the other hand, if the decision result in the step S24 is YES, a step S26 records the time information Tc in the storage region 600 as time information Tn+1. When recording the time information in the storage region 600, the data management mechanism 501 may encipher the time information. In addition, a step S27 carries out processes similar to those of the steps S8 and S9 shown in FIGS. 4 and 5 so as to record the data and the log information or the enciphered log information in the disk 9, and the process ends.

When the log information and the time information are enciphered, the data management mechanism 501 deciphers the enciphered information.

The time on the reference clock provided as a function of the operating system (OS) can easily be changed by the user. However, in this embodiment, the time is kept by the tamper-free clock and compared with the time of the reference clock, so as to detect the back-dating. Accordingly, even if the user changes the time on the reference clock of the operating system, it is possible to positively detect the back-dating if any.

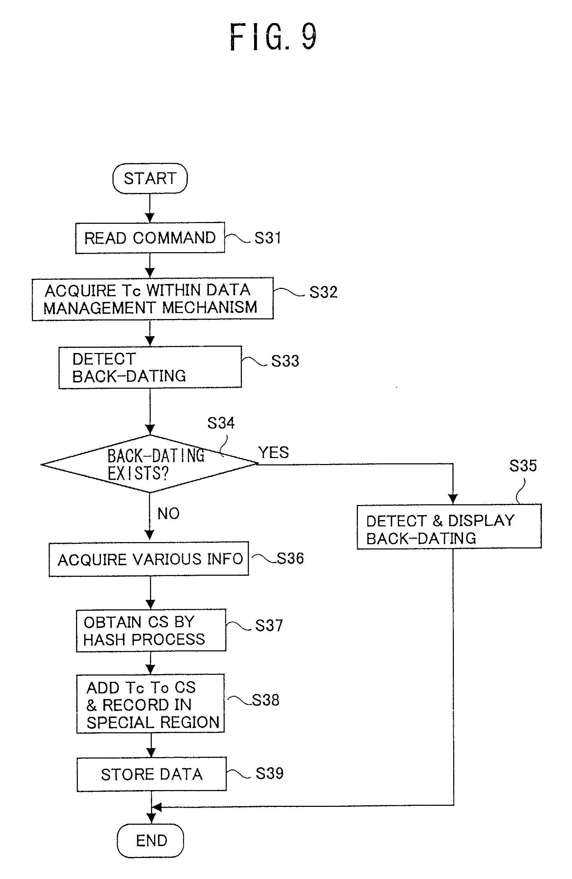

FIG. 9 is a flow chart for explaining a check sum recording process. The check sum recording process shown in FIG. 9 is carried out by the data management mechanism 501. In FIG. 9, a step S31 reads a command which is input by the user from the input section 16 of the personal computer 1 and instructs storage of data in the disk 9 or, an access command received by the personal computer 1 or an access command to the disk 9 generated within the personal computer 1. A step S32 acquires the time information Tc of the tamper-free clock within the data management mechanism 501 at the point in time when the command is read in the step S31. A step S33 detects the back-dating, similarly as in the case of the time information recording process described above in conjunction with FIG. 7. A step S34 decides whether or not the back-dating exists. If the decision result in the step S34 is YES, a step S35 displays the detected back-dating on the display 2 of the personal computer 1, and the process ends.

On the other hand, if the decision result in the step S34 is NO, a step S36 acquires various information, including the data management mechanism information of the data management mechanism 501, the storage apparatus information of the disk drive 7, the user information of the user who is logged-on, and disk identification information of the disk 9. Each disk 9 is recorded with storage medium identification information such as the disk identification information (or number), and the disk identification information can be acquired by reading the storage medium identification information from the disk 9 when the disk 9 is loaded into the disk drive 7.

A step S37 obtains a check sum CS by carrying out a hash process with respect to the time information Tc, the data to be stored, the data management mechanism information of the data management mechanism 501, the storage apparatus information of the disk drive 7, the user information of the user who is logged-on, and the disk identification information of the disk 9. A step S38 adds and records the time information Tc to the check sum CS in a special region 611 of the disk 9. In addition, a step S39 carries out processes similar to those of the steps S8 and S9 shown in FIGS. 4 and 5 so as to record the data and the log information or the enciphered log information in the disk 9, and the process ends. The step S37 may carry out the hash process with respect to at least the time information Tc.

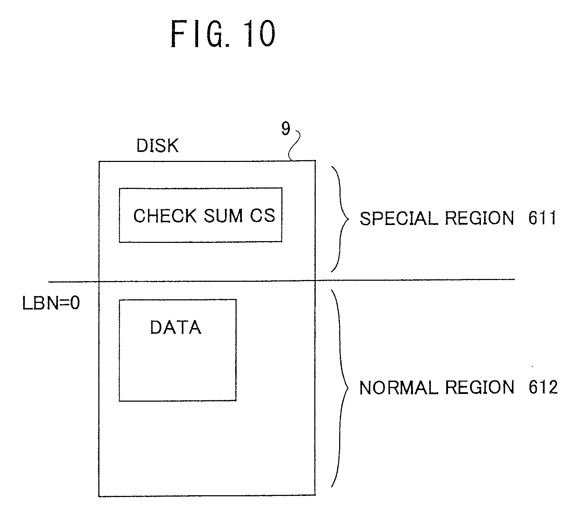

FIG. 10 is a diagram for explaining the storage regions of the disk 9. As shown in FIG. 10, the special region 611 and a normal region 612 are provided in the disk 9. The check sum CS added with the time information Tc is recorded in the special region 611. On the other hand, the data to be stored is recorded in the normal region 612. When the storage region 600 shown in FIG. 8 is provided in the disk 9, the storage region 600 may be provided within the special region 611 or, within a region other than the special region 611 and the normal region 612. In addition, the log information or the enciphered log information may be recorded in the special region (medium control information region or access control region) 611 or, in the storage region 600 or, in an exclusive region other than the normal region (user data recording region) 612.

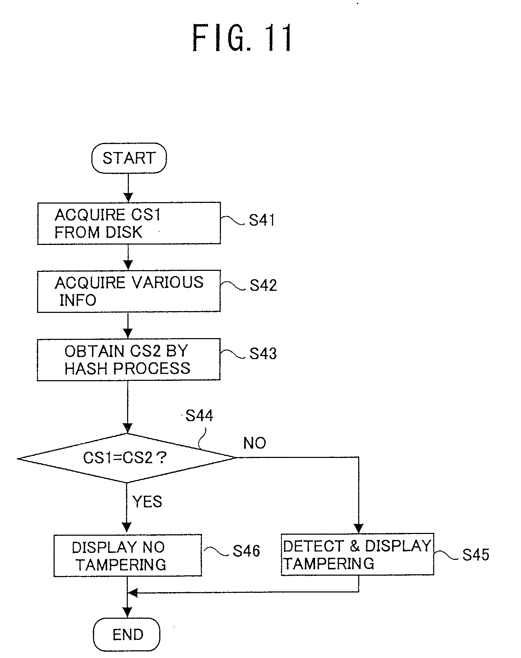

By confirming the check sum which is recorded in the disk 9, the user can know of an unauthorized access to the disk 9, such as tampering (or alteration) of the recorded data. FIG. 11 is a flow chart for explaining a check sum confirmation process. The check sum confirmation process shown in FIG. 11 is carried out by the data management mechanism 501.

In FIG. 11, a step S41 acquires a check sum CS1 by reading the check sum CS1 from the special region 611 of the disk 9. A step S42 acquires various information, including the time information Tc added to the check sum CS1, the data management mechanism information of the data management mechanism 501, the storage apparatus information of the disk drive 7, the user information of the user who is logged-on, and the disk identification information of the disk 9. A step S43 obtains a check sum CS2 by carrying out a hash process with respect to the time information Tc obtained from the data management mechanism 501, the stored data (that is, the data recorded in the normal region 612 of the disk 9), the data management mechanism information of the data management mechanism 501, the storage apparatus information of the disk drive 7, the user information of the user who is logged-on, and the disk identification information of the disk 9. The step S42 may acquire at least the time information Tc added to the check sum CS1, and in this case, the step S43 may carry out the hash process with respect to at least the time information Tc from the data management mechanism 501.

A step S44 decides whether or not the acquired check sum CS1 matches the obtained check sum CS2. If the decision result in the step S44 is NO, a step S45 detects a data tampering and displays a message indicating the data tampering on the display 2 of the personal computer, and the process ends. On the other hand, if the decision result in the step S44 is YES, a step S46 detects that no data tampering exists in the disk 9, and displays a message indicating no data tampering on the display 2 of the personal computer 1, and the process ends.

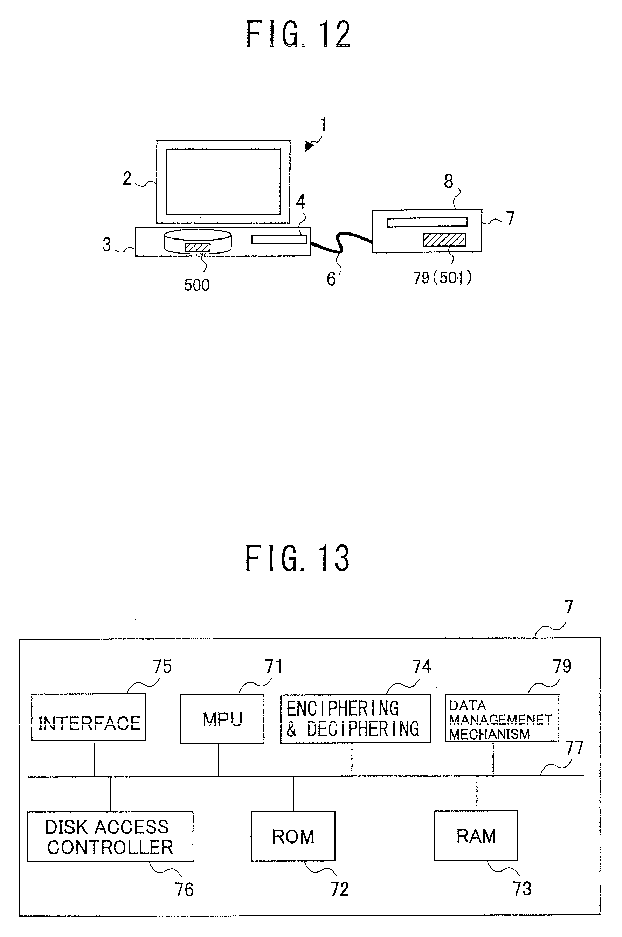

FIG. 12 is a diagram showing a system applied with a second embodiment of the data management mechanism according to the present invention. In FIG. 12, those parts which are the same as those corresponding parts in FIG. 1 are designated by the same reference numerals, and a description thereof will be omitted. The personal computer 1 forms a second embodiment of the information processing apparatus according to the present invention. In this embodiment, the PC card connecting section 4 may be omitted. In this second embodiment, the data management mechanism is provided within the disk drive 7.

FIG. 13 is a system block diagram showing a structure of an important part of the disk drive 7 shown in FIG. 12. In FIG. 13, those parts which are the same as those corresponding parts in FIG. 3 are designated by the same reference numerals, and a description thereof will be omitted. As shown in FIG. 13, a data management mechanism 79 formed by hardware is connected to the bus 77. When using the data management mechanism 501 formed by software, the data management mechanism 79 may be omitted, and the data management mechanism 501 is stored in the ROM 72 and/or the RAM 73 instead. The data management mechanism 79 or the data management mechanism 501 forms the second embodiment of the data management mechanism. The operation of the data management mechanism 79 or the data management mechanism 501 is the same as that of the first embodiment described above.

The enciphering and deciphering circuit 74 is used when the step S8 shown in FIGS. 4 and 5 enciphers the log information, when the time information to be recorded in the storage region 600 is enciphered, and when the enciphered information is deciphered. If an enciphering and deciphering means is provided within the data management mechanism 79 or the data management mechanism 501, the enciphering and deciphering circuit 74 may be omitted.

FIG. 14 is a system block diagram showing a hardware structure of the data management mechanism 79. FIG. 14 shows a case where an enciphering circuit portion of the enciphering and deciphering circuit 74 is provided within the data management mechanism 79 and obtains the check sum CS. The data management mechanism 79 includes a tamper-free clock 701, a memory 702 which forms the storage region 600 shown in FIG. 8, a check sum generating mechanism 703, and a check sum storage memory 704 which are connected by a bus 705 as shown in FIG. 14. The check sum generating mechanism 703 adds the time information Tc, the data to be stored, the data management mechanism information of the data management mechanism 79, the storage apparatus information of the disk drive 7, the user information of the user who is logged-on, and the disk identification information of the disk 9 which are obtained via the bus 77, and carries out an enciphering process (hash process) in an enciphering section 712 based on an enciphering key which is stored in a memory 711, so as to obtain the check sum CS. The obtained check sum CS is stored in the check sum storage memory 704, and is recorded in the special region 611 of the disk 9 shown in FIG. 10.

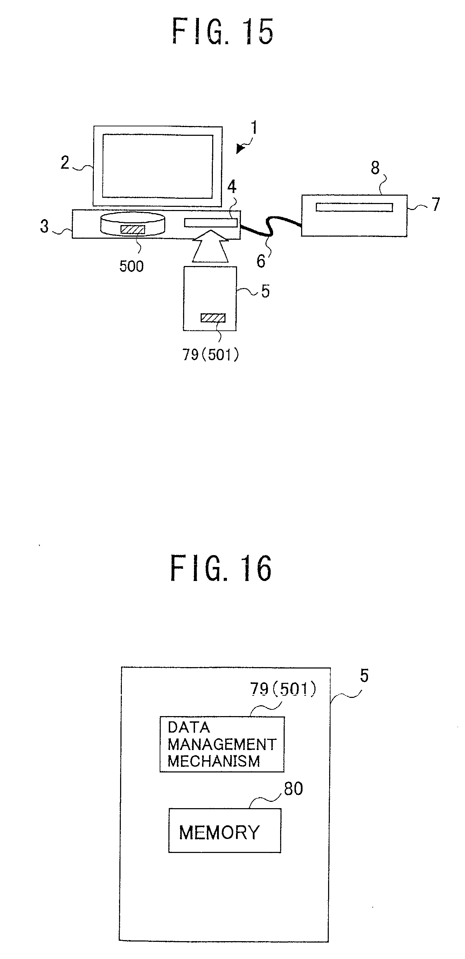

FIG. 15 is a diagram showing a system applied with a third embodiment of the data management mechanism according to the present invention. In FIG. 13, those parts which are the same as those corresponding parts in FIG. 1 are designated by the same reference numerals, and a description thereof will be omitted. The personal computer 1 forms a third embodiment of the information processing apparatus according to the present invention. In this third embodiment, the data management mechanism is provided within the PC card 5.

FIG. 16 is a diagram showing a structure of an important part of the PC card 5. As shown in FIG. 16, the PC card 5 includes a data management mechanism 79 which is formed by hardware or a data management mechanism 501 which is formed by software, and a memory 80. The memory 80 stores password, card identification (ID) information or the like of the PC card 5, which is collated when making a password authentication of the PC card 5. The memory 80 may form the storage region 600 shown in FIG. 8.

The operation of the data management mechanism 79 or the data management mechanism 501 is the same as that of the first embodiment described above. In this case, the card ID information or the like of the PC card 5 may be used as the data management mechanism information of the data management mechanism 79 or the data management mechanism 501.

In each of the embodiments described above, the disk drive 7 is connected to the personal computer 1, which forms the host unit, via the wire and/or wireless connecting means 6. The personal computer 1 may be a desk-top computer or a lap-top (or portable) computer. In addition, the host unit is not limited to the personal computer 1. The information processing apparatus forming the host unit may be a portable terminal equipment such as a portable telephone set, a digital camera for taking still pictures and/or moving pictures, an intelligent television apparatus or the like.

Moreover, by notifying from the control software 500 to the disk drive 7 the operations such as create, update and delete with respect to the file system, it becomes possible to realize the present invention in a general-purpose file system.

Further, the present invention is not limited to these embodiments, but various variations and modifications may be made without departing from the scope of the present invention.

## Claims

1. A data management mechanism
**characterized by**:
a tamper-free clock; and
recording means for recording information related to an access to a storage medium as an access log in the storage medium, said information including time information from said tamper-free clock.

2. The data management mechanism as claimed in claim 1, **characterized in that** said information includes at least one of user information of a user who makes the access to the storage medium, data management mechanism information of the data management mechanism, storage apparatus information of a storage apparatus which is loaded with the storage medium, and data to be recorded in the storage medium.

3. The data management mechanism as claimed in claim 1 or 2, further **characterized by**:
enciphering means for enciphering the time information.

4. The data management mechanism as claimed in any of claims 1 to 3, further **characterized by**:
enciphering means for enciphering the access log,
said recording means recording the enciphered access log in the storage medium.

5. The data management mechanism as claimed in any of claims 1 to 4, further **characterized by**:
detecting means for detecting and notifying an unauthorized access to the storage medium based on the access log read from the storage medium.

6. The data management mechanism as claimed in any of claims 1 to 5, **characterized in that** said tamper-free clock and said recording section are formed by hardware or software.

7. An information processing apparatus forming a host unit which accesses a storage medium, **characterized by**:
a data management mechanism comprising a tamper-free clock, and a recording section which records information related to an access to the storage medium as an access log in the storage medium,
said information including time information from said tamper-free clock.

8. The information processing apparatus as claimed in claim 7, **characterized in that** said information includes at least one of user information of a user who makes the access to the storage medium, data management mechanism information of the data management mechanism, storage apparatus information of a storage apparatus which is loaded with the storage medium, and data to be recorded in the storage medium.

9. The information processing apparatus as claimed in claim 7 or 8, **characterized in that** said data management mechanism further comprises enciphering means for enciphering the time information.

10. The information processing apparatus as claimed in any of claims 7 to 9, **characterized in that** said data management mechanism further comprises enciphering means for enciphering the access log, said recording means recording the enciphered access log in the storage medium.

11. The information processing apparatus as claimed in any of claims 7 to 10, **characterized in that** said data management mechanism further comprises detecting means for detecting and notifying an unauthorized access to the storage medium based on the access log read from the storage medium.

12. The information processing apparatus as claimed in any of claims 7 to 11, **characterized in that** said tamper-free clock and said recording section are formed by hardware or software.

13. A storage apparatus **characterized by**:
a data management mechanism comprising a tamper-free clock, and recording means for -recording information related to an access to the storage medium as an access log in the storage medium, said information including time information from said tamper-free clock.

14. The storage apparatus as claimed in claim 13, **characterized in that** said information includes at least one of user information of a user who makes the access to the storage medium, data management mechanism information of the data management mechanism, storage apparatus information of a storage apparatus which is loaded with the storage medium, and data to be recorded in the storage medium.

15. The storage apparatus as claimed in claim 13 or 14, **characterized in that** said data management mechanism further comprises enciphering means for enciphering the time information.

16. The storage apparatus as claimed in any of claims 13 to 15, **characterized in that** said data management mechanism further comprises enciphering means for enciphering the access log, said recording means recording the enciphered access log in the storage medium.

17. The storage apparatus as claimed in any of claims 13 to 16, **characterized in that** said data management mechanism further comprises detecting means for detecting and notifying an unauthorized access to the storage medium based on the access log read from the storage medium.

18. The storage apparatus as claimed in any of claims 13 to 17, **characterized in that** said tamper-free clock and said recording section are formed by hardware or software.

19. A card which is detachably connectable to an information processing apparatus forming a host unit which accesses a storage medium, **characterized by**:
a data management mechanism comprising a tamper-free clock, and recording means for recording information related to an access to the storage medium as an access log in the storage medium, said information including time information from said tamper-free clock.

20. The card as claimed in claim 19, **characterized in that** said information includes at least one of user information of a user who makes the access to the storage medium, data management mechanism information of the data management mechanism, storage apparatus information of a storage apparatus which is loaded with the storage medium, and data to be recorded in the storage medium.

21. The card as claimed in claim 19 or 20, **characterized in that** said data management mechanism further comprises enciphering means for enciphering the time information.

22. The card as claimed in any of claims 19 to 21, **characterized in that** said data management mechanism further comprises enciphering means for enciphering the access log, said recording means recording the enciphered access log in the storage medium.

23. The card as claimed in any of claims 19 o 22, **characterized in that** said data management mechanism further comprises detecting means for detecting and notifying an unauthorized access to the storage medium based on the access log read from the storage medium.

24. The card as claimed in any of claims 19 to 23, **characterized in that** said tamper-free clock and said recording section are formed by hardware or software.
